Europäisches Patentamt

European Patent Office

Office européen des brevets

(19)

(11) Numéro de publication : **0 181 795 B1**

(12) **FASCICULE DE BREVET EUROPÉEN**

(45) Date de publication du fascicule du brevet :
13.04.88

(51) Int. Cl.⁴ : **B 65 G 67/08**

(21) Numéro de dépôt : **85401982.5**

(22) Date de dépôt : **11.10.85**

(54) **Tête de chargeur de sacs.**

(30) Priorité : **29.10.84 FR 8416479**

(43) Date de publication de la demande :
**21.05.86 Bulletin 86/21**

(45) Mention de la délivrance du brevet :
**13.04.88 Bulletin 88/15**

(84) Etats contractants désignés :
**AT BE CH DE GB IT LI LU NL SE**

(56) Documents cités :
**EP-A- 0 064 426**
**US-A- 2 980 222**
**US-A- 3 837 510**

(73) Titulaire : **Etablissements Boubiela Société Anonyme**
**20bis, Boulevard Léon-Blum**
**F-02104 Saint-Quentin (FR)**

(72) Inventeur : **Noel, Jean-Marie**
**20, Rue Geoffroy St. Hilaire**
**F-02100 St. Quentin (FR)**

(74) Mandataire : **Laget, Jean-Loup et al**
**Cabinet Pierre Loyer 77, rue Boissière**
**F-75116 Paris (FR)**

Jouve, 18, rue St-Denis, 75001 Paris, France

EP 0 181 795 B1

## Description

L'invention concerne une tête de chargeur de sacs, plus particulièrement adaptée au chargement des conteneurs.

De plus en plus on assure le transport de produits en sacs dans des conteneurs pour éviter les problèmes posés par la poussière des sacs et le risque de déchirure des enveloppes de sacs au cours des manutentions et du transport. C'est ainsi qu'on charge des conteneurs avec des sacs de produits tels que du ciment, du plâtre, du grain, du malt, des engrais ou d'autres produits agro-alimentaires. Les conteneurs sont en général des parallélépipèdes rectangles et ils sont chargés par l'une de leurs petites faces latérales. Leur contrainte spécifique est leur taux de remplissage, dont dépend la rentabilité du transport.

Il est déjà connu de remplir les conteneurs avec un chargeur de sacs du type à dépose manuelle.

Par le document EP-A 64 426, il est également connu de remplir les wagons et les camions avec une table à dépose automatique par basculement des sacs. Dans le cas des wagons et des camions, la table de dépose des sacs est articulée sur la tête de chargeur et mue par des vérins de basculement, de préférence au nombre de deux, répartis au voisinage des extrémités de la table, Comme la table est plus large qu'un sac et que, pour déposer un sac par basculement, elle doit être redressée presque verticalement sur un pivot latéral, il est nécessaire de prévoir au-dessus de la table un certain volume libre.

Dans le cas des conteneurs, il n'est pas possible, pour des raisons économiques, de laisser un volume libre sous le plafond du conteneur, et l'utilisation de ce type de table de dépose n'est pas envisageable.

L'un des buts de la présente invention est de fournir une tête de chargeur de sacs à table basculante, qui puisse assurer non seulement la dépose de lits de sacs par basculement de façon habituelle, mais également le complément de chargement sous le plafond du conteneur.

Un autre but de l'invention est de prévoir un chargement automatique et rapide des sacs par une tête de chargeur à table basculante sans nécessité d'un manutentionnaire dans le conteneur.

Par rapport à l'état de la technique reflété par le document EP-A-64 426, qui décrit une tête de chargeur de sacs, particulièrement adaptée au chargement de conteneurs, du type comportant une table basculante susceptible de déposer des sacs par basculement, à gauche et à droite, un châssis sur lequel s'articulent des moyens de basculement comportant au moins un vérin, l'invention est caractérisée en ce que la table de dépose porte une bande transporteuse susceptible de déposer les sacs au bout de la table de dépose, sans que la table de dépose bascule ; en ce qu'une partie de la table de dépose est en saillie par rapport au bâti sur lequel la table de dépose est montée ; et en ce que les moyens de basculement comportent un seul vérin de basculement qui est d'une part monté sur le bâti par une suspension à la cardan et d'autre part articulé sur le châssis en un point se trouvant en correspondance de la partie de la table de dépose qui n'est pas en saillie par rapport au bâti.

Selon d'autres caractéristiques de l'invention, qui font l'objet des revendications dépendantes :

- le châssis de la table comporte un pivot latéral gauche et un pivot latéral droit servant d'axe de basculement à la table de dépose ;
- lorsque la table est horizontale les deux pivots latéraux sont logés dans deux manchons présentant une gorge longitudinale ;
- les deux manchons sont reliés par une chaîne solidaire d'une tête de vérin, et entraînés en rotation par les mouvements de la chaîne commandés par les mouvements du vérin, de sorte que, en bout de course du vérin dans l'un ou l'autre sens, un seul des pivots soit maintenu par le manchon correspondant, l'autre pivot pouvant librement quitter le manchon et autoriser ainsi le basculement de la table ;
- l'entraînement de la bande transporteuse est assuré par deux galets de friction qui se trouvent séparés dès que la table bascule ;
- la table de dépose, présente, au bout de sa bande transporteuse une butée à rouleaux susceptible d'arrêter les sacs avant leur dépose par basculement ;
- la butée à rouleaux est rabattable vers l'avant pour autoriser le chargement des sacs en bout.

D'autres caractéristiques ressortiront de la description qui suit faite avec référence au dessin annexé sur lequel on peut voir :

Figure 1 : une vue extérieure longitudinale d'un exemple de réalisation d'une tête de chargeur de sacs selon l'invention ;

Figure 2 : une vue en coupe longitudinale de la tête de chargeur de sacs de la figure 1 lors du chargement en bout ;

Figure 3 : une vue en coupe transversale avec arrachement montrant la table de dépose en position basculée.

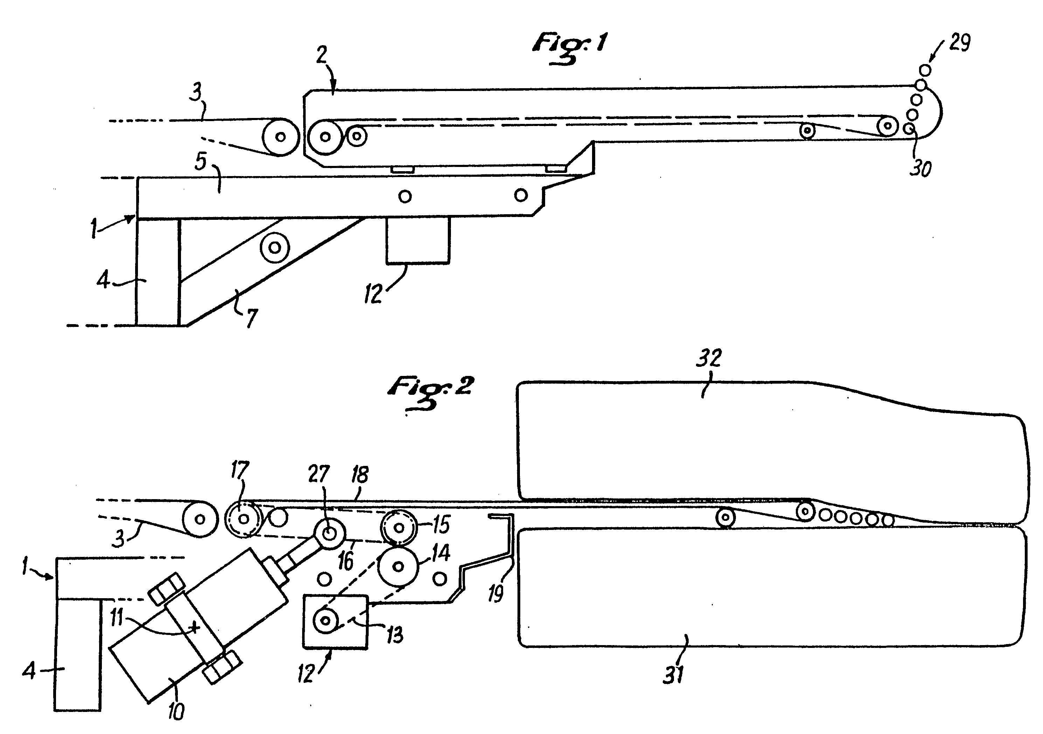

En se reportant au dessin, on peut voir que la tête de chargeur de sacs selon l'invention se compose essentiellement d'un bâti 1 et d'une table 2 basculante (figure 1). Le bâti 1 est porté par le corps du chargeur qui n'est pas représenté et qui est susceptible d'assurer les déplacements latéraux, verticaux et longitudinaux de la tête de chargeur, selon une technique connue. Le corps de chargeur porte un transporteur à bande 3 pour l'approvisionnement en sacs de la table 2, les sacs étant présentés en long.

Le bâti 1 se compose essentiellement de deux montants 4, de deux longerons 5 et 6 et de deux bras 7 obliques. Ces bas 7 assurent la rigidité de la structure du bâti et portent l'axe horizontal 8-9 (figure 3) qui sert de support au vérin de basculement 10 de la table 2. Ce vérin 10 est porté au moyen d'une suspension à la cardan non représentée mais dont le centre de pivotement est symbolisé en 11.

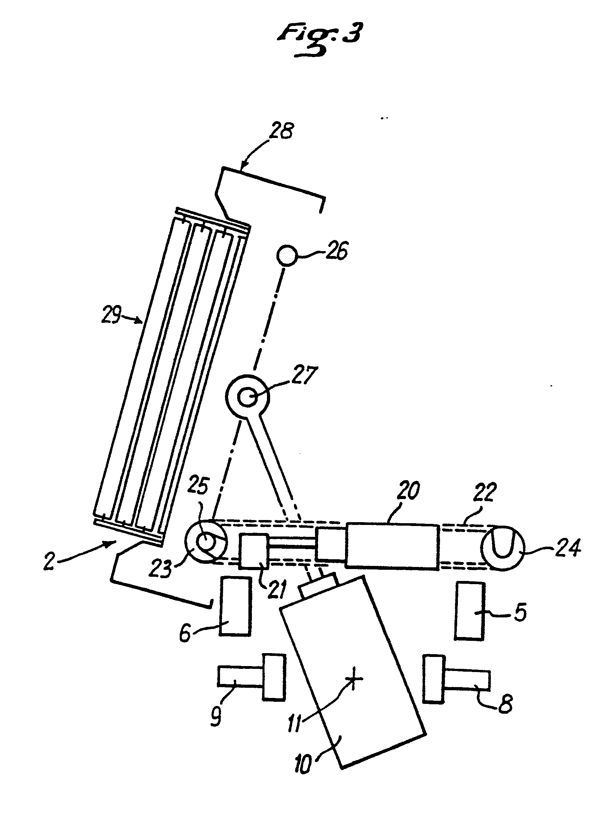

Le bâti 1 porte encore un moteur 12 (figure 2) pneumatique par exemple, qui entraîne, par l'intermédiaire d'une transmission mécanique 13, à chaîne par exemple, un galet de friction 14 susceptible, à son tour, d'entraîner un deuxième galet de friction 15 dont l'axe est solidaire de la table basculante 2. Le galet 15 est relié, par une chaîne 16 par exemple, au rouleau 17 d'entraînement de la bande transporteuse 18 de la table 2.

Le bâti 1 porte enfin une butée avant 19 (figure 2) et un vérin 20 transversal (figure 3) chargé de contrôler le côté du basculement de la table 2. Ce vérin 20 commande les déplacements d'une tête 21 solidaire d'une chaîne 22 entraînant en rotation deux manchons 23 et 24 présentant une gorge longitudinale. Dans cette gorge, lorsque la table 2 est au repos, se trouve un pivot latéral, respectivement 25 et 26, faisant partie du châssis de la table. Lorsque le vérin 20 est en extension, la tête 21 est éloignée le manchon 23 interdit tout mouvement vers le haut du pivot 25, le manchon 24 a sa gorge ouverte vers le haut et le pivot 26 peut s'en échapper. Si alors le vérin 10 est alimenté, il repousse le châssis de la table 2 symbolisé par l'axe 27, et la table bascule vers la gauche. Lorsque le vérin 20 est en compression, la tête 21 est rapprochée, le manchon 23 a sa gorge ouverte vers le haut et le manchon 24 retient le pivot 26. Si le vérin 10 est alimenté, la table 2 bascule vers la droite.

La table 2 de dépose des sacs présente un châssis symbolisé en 27, un pivot gauche 25 et un pivot droit 26, une carrosserie schématisée en 28, et la bande transporteuse 18. Elle présente encore, à son extrémité avant, une butée 29 à rouleaux (figure 1). L'ensemble de la butée 29 à rouleaux est susceptible de pivoter autour d'un axe 30, qui est par exemple l'axe du premier rouleau. Un vérin non représenté commande le pivotement de la butée 29.

Le fonctionnement de la table de dépose s'analyse de la manière suivante, en supposant la table 2 horizontale et la butée à rouleaux 29 relevée, comme sur la figure 1. Les deux galets de friction 14 et 15 étant en appui l'un sur l'autre, la bande transporteuse 18 est entraînée. Un sac acheminé par le transporteur 3 se trouve donc acheminé jusqu'au bout de la table 2, c'est-à-dire jusqu'à la butée 29. Il faut remarquer que la longueur de la table 2 correspond sensiblement à la longueur d'un sac. Un contact de fin de course, non représenté, détecte l'arrivée du sac sur la butée 29 et commande le basculement de la table par l'intermédiaire du vérin 10. Lorsque ce vérin commence son extension, le galet 15 est soulevé et il n'est plus entraîné par le galet 14. La bande 18 s'arrête alors. La table bascule selon le programme de l'automate, à gauche ou à droite, puis revient à sa position horizontale. Les galets 14 et 15 étant alors en contact, la bande 18 est de nouveau entraînée.

Lorsque la tête de chargeur a empilé 9 lits de sacs, la table basculante ne peut plus continuer à charger, car elle ne dispose plus d'un espace suffisant sous le plafond du conteneur.

On commande alors le basculement vers l'avant (figure 2) de la butée à rouleaux 29, et on procède à un chargement en bout. La référence 31 désignant un sac du dernier lit posé, on avance la table basculante au-dessus de ce sac, jusqu'à ce que la butée avant 19 vienne au contact du sac 31. L'ensemble de la bande transporteuse 18 et de la butée à rouleaux 29 recouvre alors environ 2/3 de la longueur du sac 31, ce qui est suffisant pour assurer le glissement d'un nouveau sac 32 sur le sac 31. Lorsque ce sac 32 a été mis en place au-dessus du sac 31, la tête de chargeur est retirée, puis déplacée pour charger un nouveau sac. L'encombrement en hauteur de la partie de la table qui recouvre le sac 31 est réduit au minimum.

Par ce chargement en bout, on peut charger 2 nouveaux lits de sacs au-dessus des 9 lits chargés par basculement. Cependant, compte-tenu de l'encombrement de la carrosserie de la table 2, ces deux nouveaux lits ne comportent pas 5 sacs chacun, mais seulement 4. Par ailleurs, en raison des mouvements de recul et d'avance de la tête de chargeur, la cadence moyenne de chargement est plus réduite lors du chargement en bout (750 sacs/heure pour le chargement à basculement par exemple). Mais les avantages d'un chargement automatique compensent largement ces inconvénients.

## Revendications

1. Tête de chargeur de sacs, particulièrement adaptée au chargement de conteneurs, du type comportant une table (2) basculante susceptible de déposer des sacs par basculement, à gauche et à droite, un châssis (27) sur lequel s'articulent des moyens de basculement comportant au moins un vérin (10), caractérisée en ce que la table de dépose (2) porte une bande transporteuse (18) susceptible de déposer les sacs au bout de la table de dépose (2), sans que la table de dépose (2) bascule ; en ce qu'une partie de la table de dépose (2) est en saillie par rapport au bâti (1) sur lequel la table de dépose est montée ; et en ce que les moyens de basculement comportent un seul vérin (10) de basculement qui est d'une part monté sur le bâti (1) par une suspension à la cardan et d'autre part articulé sur le châssis (27) en un point se trouvant en correspondance de la partie de la table de dépose (2) qui n'est pas en saillie par rapport au bâti (1).

2. Tête de chargeur selon la revendication 1, caractérisée en ce que le châssis de la table (2) comporte un pivot latéral gauche (25) et un pivot latéral droit (26) servant d'axe de basculement à la table de dépose.

3. Tête de chargeur selon la revendication 2, caractérisée en ce que lorsque la table est horizontale, les deux pivots latéraux (25, 26) sont logés dans deux manchons (23, 24) présentant une gorge longitudinale.

4. Tête de chargeur selon la revendication 3, caractérisée en ce que les deux manchons (23, 24) sont reliés par une chaîne (22) solidaire d'une tête (21) de vérin (20), et entraînés en rotation par les mouvements de la chaîne commandés par les mouvements du vérin, de sorte que, en bout de course du vérin (20) dans l'un ou l'autre sens, un seul des pivots (25, 26) soit maintenu par le manchon correspondant, l'autre pivot pouvant librement quitter le manchon et autoriser ainsi le basculement de la table (2).

5. Tête de chargeur selon la revendication 1, caractérisée en ce que l'entraînement de la bande transporteuse (18) est assuré par deux galets de friction (14, 15) qui se trouvent séparés dès que la table bascule.

6. Tête de chargeur selon la revendication 5, caractérisée en ce que la table de dépose (2) présente, au bout de sa bande transporteuse (18) une butée à rouleaux (29) susceptible d'arrêter les sacs avant leur dépose par basculement.

7. Tête de chargeur selon la revendication 6, caractérisée en ce que la butée à rouleaux (29) est rabattable vers l'avant pour autoriser le chargement des sacs en bout.


**Claims**

1. A loader head for a sack loader particularly adapted for the loading of containers, of the type comprising a tipping table (2) capable of dumping sacks by tipping left and right, a sub-frame (27) on which are articulated tipping means comprising at least one jack (10), characterized in that the dumping table (2) carries a conveyor belt (18) capable of dumping the sacks from the end of the dumping table (2) without requiring the dumping table (2) to be tipped ; in that a portion of the dumping table (2) protrudes beyond the frame (1) on which the dumping table is mounted ; and in that the tipping means comprise one single swinging jack (10) which is on one hand mounted on the frame (1) by means of an universal joint suspension and on the other hand is articulated to the sub-frame (27) at a point located in registry with the portion of the dumping table (2) which is not protruding beyond the frame (1).

2. A loader head according to claim 1, characterized in that the sub-frame of the table (2) comprises a lateral pivot (25) on the left and a lateral pivot (26) on the right, serving as tipping axes for the dumping table.

3. A loader head according to claim 2, characterized in that, when the table is horizontal, the two lateral pivots (25, 26) are lodged within two sleeves (23, 24) presenting a longitudinal groove.

4. A loader head according to claim 3, characterized in that the two sleeves (23, 24) are linked together by a chain (22) bound up with the head (21) of a jack (20) and are rotatably driven by the movements of the chain controlled by the movements of the jack so that, on the end of a stroke of the jack (20) in either direction, only one of the pivots (25, 26) will be retained by the corresponding sleeve while the other pivot may freely release itself out of the sleeve, thereby allowing the table (2) to tip.

5. A loader head according to claim 1, characterized in that the drive of the conveyor belt (18) is effected by means of two friction rollers (14, 15) which are separated as soon as the table swings.

6. A loader head according to claim 5, characterized in that the dumping table (2) presents on the end of its conveyor belt (18) a swinging gate (29) comprising a plurality of rollers, said gate being capable to stop the sacks prior to their being dumped by tipping.

7. A loader head according to claim 6, characterized in that the roller gate (29) is adapted for being folded down forwards for allowing sacks to be loaded endwise.


**Patentansprüche**

1. Abgabekopf für eine Verladevorrichtung für Säcke, insbesondere zum Beladen von Containern, mit einem verkippbaren Tisch (2), über den Säcke durch Kippen nach links und nach rechts ablegbar sind, und mit einem Rahmen (27), an dem Kippeinrichtungen mit wenigstens einem Zylinder (10) verschwenkbar befestigt sind, dadurch gekennzeichnet, daß der Ablegetisch (2) ein Transportband (18) trägt, das zum Abstellen der Säcke am Ende des Ablegetisches (2) eingerichtet ist, ohne daß der Ablegetisch (2) verschwenkt, daß ein Abschnitt des Ablegetisches (2) relativ zum Gestell (1), auf dem der Ablegetisch (2) befestigt ist, übersteht, und daß die Kippeinrichtungen einen einzigen Kippzylinder (10) aufweisen, der zum einen mittels einer Kardanaufhängung am Gestell (1) und zum anderen verschwenkbar am Rahmen (27) an einer Stelle befestigt ist, die an den Abschnitt des Ablegetisches (2) angeschlossen ist, der relativ zum Gestell (1) nicht übersteht.

2. Abgabekopf nach Anspruch 1, dadurch gekennzeichnet, daß das Gestell des Tisches (2) eine linke seitliche Schwenkachse (25) und eine rechte seitliche Schwenkachse (26) aufweist, die als Kippachsen für den Ablegetisch dienen.

3. Abgabekopf nach Anspruch 2, dadurch gekennzeichnet, daß bei horizontaler Ausrichtung des Tisches die beiden seitlichen Schwenkachsen (25, 26) in zwei Buchsen (23, 24) aufgenommen sind, die jeweils eine Längsausnehmung aufweisen.

4. Abgabekopf nach Anspruch 3, dadurch gekennzeichnet, daß die beiden Buchsen (23, 24) über eine fest an einem Kopf (21) des Zylinders (20) befestigte Kette (22) miteinander verbunden und durch die Bewegungen der Kette in Drehbewegung versetzbar sind, wobei die Kettenbewegungen von der Bewegung des Zylinders derart steuerbar sind, daß am Ende des Ausfahrweges des Zylinders (20) in der einen oder der anderen Richtung nur eine der Schwenkachsen (25, 26) von der zugeordneten Buchse gehaltert wird, während die andere Schwenkachse frei aus der Buchse ausführbar und damit der Tisch (2) verkippbar ist.

5. Abgabekopf nach Anspruch 1, dadurch gekennzeichnet, daß der Antrieb des Transportbandes (18) über zwei Reibräder (14, 15) bewerkstelligt wird, die voneinander getrennt werden, sobald der Tisch verkippt.

6. Abgabekopf nach Anspruch 5, dadurch gekennzeichnet, daß der Ablegetisch (2) am Ende seines Transportbandes (18) einen Rollenanschlag (29) zum Abstoppen der Säcke vor deren Abgabe durch Verkippen aufweist.

7. Abgabekopf nach Anspruch 6, dadurch gekennzeichnet, daß der Rollenanschlag (29) nach vorne herunterklappbar ist, um das Verladen der Säcke über das Ende zuzulassen.

Fig. 1

Fig. 2

# Fig. 3